# EUROPÄISCHE PATENTSCHRIFT

(11) **EP 1 283 784 B1**
(45) Veröffentlichungstag und Bekanntmachung des Hinweises auf die Patenterteilung: **26.10.2005**
(21) Anmeldenummer: 02721990.6
(22) Anmeldetag: 02.03.2002
(51) Int. Cl.: B60N 2/02, B60R 16/02, H04L 12/10

(54) **STEUERUNGS- UND ENERGIEVERSORGUNGSSYSTEM FÜR WENIGSTENS ZWEI FLUGZEUGSITZPLÄTZE**
CONTROL AND ENERGY SUPPLY SYSTEM FOR AT LEAST TWO AIRCRAFT SEATS
SYSTEME DE COMMANDE ET D'ALIMENTATION EN ENERGIE POUR AU MOINS DEUX SIEGES D'AVION

(30) Priorität: 28.03.2001 DE 10115523
(43) Veröffentlichungstag der Anmeldung: 19.02.2003
(73) Patentinhaber: Recaro Aircraft Seating GmbH & Co. KG, 74523 Schwäbisch Hall (DE)
(72) Erfinder: WAGNER, Wolfgang, 88048 Friedrichshafen (DE)
(74) Vertreter: Bartels & Partner
(86) Internationale Anmeldenummer: PCT/DE2002/000782
(87) Internationale Veröffentlichungsnummer: WO 2002/076825

(56) Entgegenhaltungen:
- EP-A- 0 973 079
- EP-A- 1 028 512
- GB-A- 2 318 429

## Beschreibung

Die Erfindung betrifft ein Steuerungs-, Energieversorgungsmangement und ein "Power-Sharing"-Konzept für die Antriebe und Steuereinheiten in Flugzeugsitzen (s. zum Beispiel EP-A-0 973 079, dem Oberbegriff der unabhängigen Patentansprüche entsprechend).

Bei den Steuereinheiten, Antriebseinheiten und sonstigen Konfigurationsänderungselementen eines Flugzeugsitzes können folgende schwerwiegende Fehler auftreten: Lose oder abgefallene Steck- oder sonstiger Verbinder, Kabelbruch, Kurzschlüsse zu Masse oder einer anderen Versorgungsleitung, ausgefallene Steuereinheiten sowie der Ausfall von Antriebseinheiten oder Eingabegeräten bzw. Bedienungselementen, bei denen es sich beispielsweise um Taster, Schalter, Chipkartenleser evtl mit einem Display handeln kann.

Der vorliegenden Erfindung liegt die Aufgabe zugrunde, ein System anzugeben, bei dem die Funktion der Steuereinheiten, Antriebseinheiten, bzw. sonstiger Konfigurationsänderungselemente sichergestellt ist.

Diese Aufgabe wird erfindungsgemäß durch die Merkmale der unabhängigen Patentansprüche gelöst.

Vorteilhafte Ausgestaltungen der Erfindung sind in den abhängigen Ansprüchen gekennzeichnet.

Die Erfindung sieht ein Redundanzkonzept vor, das fehlertolerant ist. Vorteilhafterweise wird das Konzept durch ein "Power-Sharing und Management"-System zur Anpassung an die jeweiligen Steuerungsanforderungen ergänzt, wobei es sich hierbei um einen sehr wesentlichen, eigenständigen Erfindungsgedanken handelt.

Das erfindungsgemäße System besteht aus einer für den jeweiligen Flugzeugsitzplatz angepaßten Anzahl von Antriebseinheiten, Steuereinheiten und Überwachungseinheiten, wobei diese Elemente von wenigstens zwei vorzugsweise benachbarten Flugzeugsitzplätzen bevorzugt in Form einer Bus-Struktur oder Ring-Struktur angeordnet sind. Das System kann aber auch die Elemente von drei oder mehr Flugzeugsitzplätzen umfassen.

Die Bus-Struktur kann ein Ringsystem oder auch ein lineares System sein. Bei linearen Strukturen werden bevorzugte Doppelbusse verwendet, die antiparallel verlegt werden.

Eine andere, z. B. diskrete Anordnung der Eingabe - bzw. Bedienungselemente ist auch möglich.

Die Steuereinheiten und die Antriebseinheiten der aus zwei oder mehr Flugzeugsitzplätzen bestehenden Sitzgruppe sind mit einer lokalen Intelligenz ausgestattet, die ständig die Konfiguration an die überwachenden Systemteile übermittelt, wobei die Einheiten z.B. mit geeigneten Sensoren ausgestattet sind. Die Steuereinheiten haben einen Bus-Controller. Die Bus-Controller von wenigstens zwei Steuereinheiten sind über die Konfigurationsmeldungen über alle Vorgänge in dem System informiert.

Die Steuereinheit und die Antriebseinheiten eines Flugzeugsitzplatzes sind in der Weise mit der Steuereinheit und den Antriebseinheiten wenigstens eines weiteren Flugzeugsitzplatzes bevorzugt über eine Bus-Struktur oder Ring-Struktur derart verbunden, daß jede Antriebseinheit über zwei Verbindungen von den zugehörigen beiden Steuereinheiten ansteuerbar ist. Wenn die normale Bus-Verbindung zwischen einer Antriebseinheit und der zugehörigen Steuereinheit des Flugzeugsitzplatzes unterbrochen ist, wird dies über die lokale Intelligenz der Systemkomponenten festgestellt und der anderen Steuereinheit gemeldet, über deren Bus-Verbindung die betroffene Antriebseinheit dann angesteuert wird.

Außerdem sieht die Erfindung vor, daß jede Antriebseinheit der beiden oder mehr Flugzeugsitzplätze von wenigstens zwei Netzgeräten mit Strom versorgbar ist. Wenn die lokale Intelligenz in den Systemkomponenten feststellt, daß der normale Strompfad eines Flugzeugsitzplatzes unterbrochen ist - wie dies bei einer abgefallenen Steck- oder sonstigen Verbindung sowie bei einem Kabelbruch in der Stromversorgung der Fall ist - wird dies über das Bus-System an die beiden Steuereinheiten gemeldet, woraufhin die Ansteuerung dann so erfolgt, daß der Strom vom Partnersystem übernommen wird. Dabei erfolgt vorzugsweise eine Stromvorausberechnung, um so sicherzustellen, daß die Partnerversorgung nicht überlastet wird.

Bevorzugt ist vorgesehen, daß die Stromversorgungsleitungen nur bei Bedarf mit Strom versorgt werden. Das bedeutet, daß im Falle eines Kurzschlusses zunächst keine Reaktion stattfindet. Die in die Steuereinheit eingebaute Kontrolleinrichtung (CBIT = Continuos Built In Test) bestromt aber in Abständen für kurze Zeit von beispielsweise 100 ms die Versorgungsleitungen, um z.B. die Elektronik der Antriebseinheiten zu versorgen, aber auch um zu prüfen, ob ein Kurzschluß im Leitungssystem vorliegt. Wird ein Kurzschluß festgestellt, wird auf die alternative Stromversorgung des Partnersystems umgeschaltet.

Alternativ kann eine konstante Stromüberwachung erfolgen, wobei im Fallle einer Überschreitung eine Abschaltung erfolgt.

Entsprechend der vorstehenden Beschreibung kann das Vorhandensein einer ungewollten Fremdversorgung beispielsweise aus dem 28 V-Flugzeugbordnetz erkannt werden. In diesem Fall werden die Systemteile angewiesen, nur noch auf die Partnerversorgung zu reagieren.

Wenn es zu einem Kurzschluß zur Masse oder zur Versorgung des Bus-Systems kommt, ist die Bus-Komunikation gestört. Dies wird sofort bemerkt und auf das Partner-System umgeschaltet.

Gemäß der vorliegenden Erfindung kann auch der Ausfall einer Steuereinheit kompensiert werden. Der Status jeder Steuereinheit sowie die Anforderungen an die Steueraufgabe werden zwischen den Steuereinheiten ausgetauscht. Der Status wird dabei auf der Basis des CBIT zusammengestellt und kommuniziert. Bleibt eine plausible Information einer Steuereinheit aus, übernimmt die andere Steuereinheit die Aufgaben des Partners. Das "Power-Management" in der Steuereinheit stellt dabei sicher, daß die Stromversorgung nicht überlastet wird. Wenn nur die Steuereinheit ausgefallen ist, kann die Stromversorgung weiter genutzt werden.

Der Ausfall einer einzelnen Antriebseinheit oder eines Bedienungselementes ist nicht auszuschließen. Da diese Geräte im allgemeinen nicht doppelt vorhanden sind, muß dieser Ausfall toleriert werden. Für solche Zwecke sind bei den Antriebseinheiten bzw. Stellsystemen manuelle Rückführungseinrichtungen vorhanden. Im Falle des Eingabegerätes bzw. Bedienungselementes kann aber das Gerät des Partners benutzt werden. Die Funktion aller anderen Systemkomponenten ist von solchen Fehlern nicht betroffen.

Im Bereich der Flugzeugsitze muß eine Vielzahl von Geräten mit Strom versorgt werden. Hierbei handelt es sich z.B. um ein Video-Unterhaltungssystem, ein Telefon und einen Internetzugang, die Versorgung für einen PC (Laptop) um Leselicht und die Sitzsteuerung.

Bedingt durch die Menge der Flugzeugsitzplätze ist der Strom pro Sitzplätz zwangläufig limitiert. Die vorliegende Erfindung nutz die Querverbindung zwischen den Sitzplätzen, um dem einzelnen Sitz mehr Leistung anzubieten, als dieser normalerweise unter "Worse-Case"-Betrachtungen erhalten kann. Da der momentan verbrauchte Strom des oder der Partnersitzplätze bekannt ist, läßt sich über die Verbindungsleitungen diese Leistungserhöhung realisieren.

Außerdem sieht die Erfindung vor, daß in Hochleistungsfällen unwichtigere Versorgungen automatisch abgeschaltet werden. Ein besonderer Fall ist dabei die Forderung, den Sitz aus allen Konfigurationen in 15 Sekunden in die Landekonfiguration zu fahren. Berechnungen zeigen, daß in einem solchen Fall die Leistungsangebote nicht ausreichen.

Die vorliegende Erfindung beinhaltet die Möglichkeit, zunächst unnötige Verbraucher abzuschalten. Hierbei kann es sich z.B. um das Leselicht, das Video oder um den PC handeln.

Ergänzend wird erfindungsgemäß auch das oder die Partnersysteme befragt, welche Strommengen zur Unterstützung bereitgestellt werden können. Bei einer solchen "Notanfrage" werden auch bei dem Partnersystem die unnötigen Verbraucher abgeschaltet.

Gemäß der vorliegenden Erfindung können die vorgegebenen Limits sowohl im Bereich der Stellgeschwindigkeiten als auch der maximalen Stromstärken eingehalten werden.

Weitere Einzelheiten der Erfindung ergeben sich aus der nachfolgenden Beschreibung bevorzugter Ausführungsformen sowie anhand der Zeichnung. Dabei zeigen:
- Figur 1: ein Bus-System, das die Elemente von drei Flugzeugsitzplätzen umfaßt;
- Figur 2: ein Ring-System und
- Figur 3: die Stromversorgung eines Doppelsitzsystems.

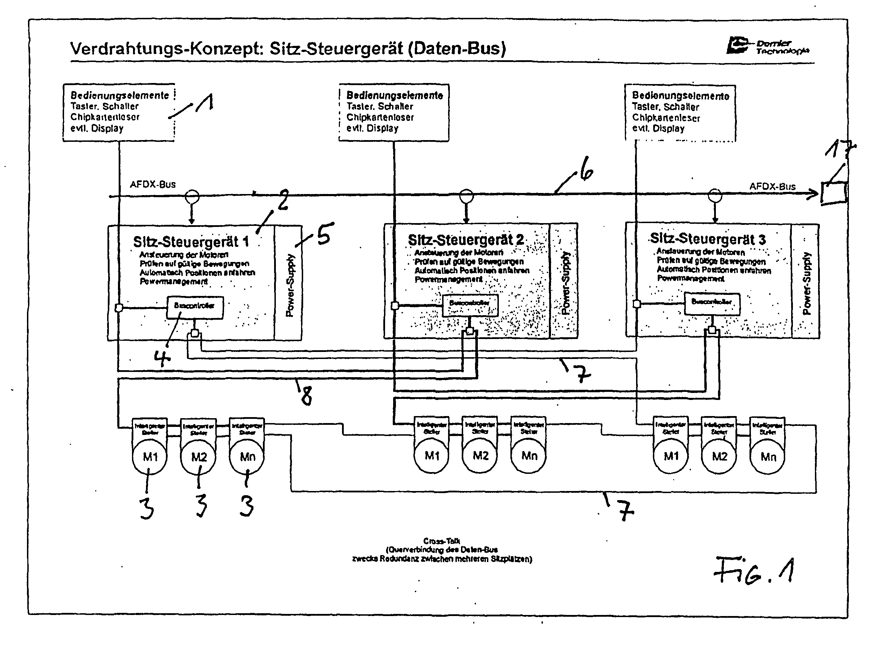

Bei dem in Figur 1 dargestellten System sind die Elemente von drei Flugzeugsitzplätzen über einen Datenbus miteinander verbunden. Jeder Flugzeugsitzplätzen enthält ein Bedienungselement 1, ein Sitz-Steuergerät 2 und drei Antriebs- bzw. Stellelemente 3.

Bei den Bedienungselementen kann es sich beispielsweise um Taster, Schalter und Chipkartenleser handeln.

Die Sitz-Steuergeräte 2 dienen der Ansteuerung der Stellmotoren 3, sie überprüfen auf gültige Bewegungen, fahren automatisch Positionen und erfüllen ein "Power-Management". Jedes Sitz-Steuergerät 2 hat einen Bus-Controller 4. Außerdem enthält jedes Steuergerät 2 ein Power-Supply 5.

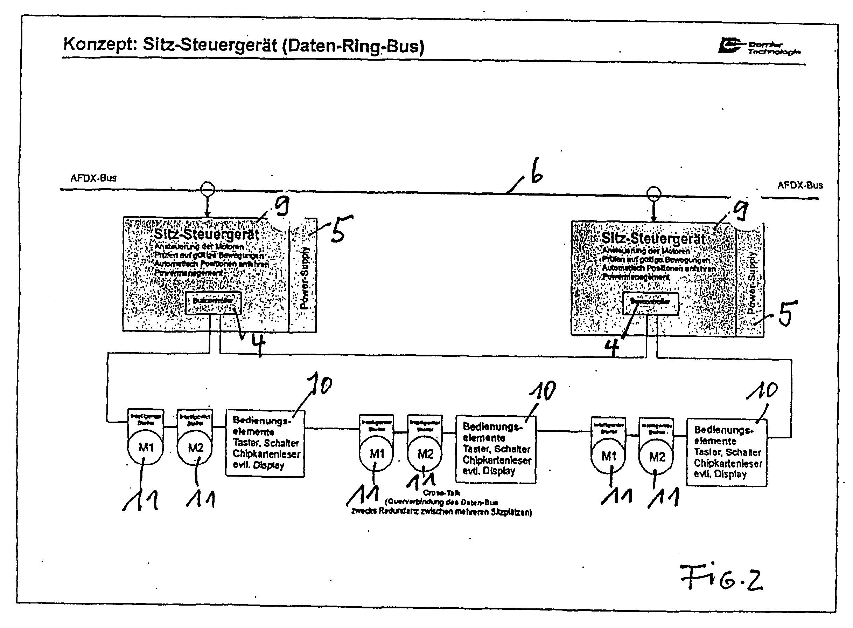

Der AFDX-Bus ist in den Figuren 1 und 2 mit dem Bezugszeichen 6 gekennzeichnet.

Die Stellmotoren 3 der in Figur 1 linken Sitzgruppe können über die Busverbindung 7 von dem zu diesem Sitzplatz gehörenden Steuergerät 2 (das sich in der Darstellung über den Stellmotoren 3 befindet) angesteuert werden. Wenn dies z.B. in Folge eines abgefallenen Steckverbinders oder Kabelbruchs nicht möglich ist, werden die Stellmotoren 3 von dem in der Darstellung mittleren Steuergerät über die Busverbindung 8 von der anderen Seite angesteuert.

Figur 2 zeigt ein Daten-Ringbussystem mit zwei Steuergeräten 9, drei Bedienungselementen 10 und drei Paaren von Stellmotoren 11 von drei benachbarten Flugzeugsitzplätzen. Hierbei sind die Bedienungselemente in den Ringbus mit einbezogen.

Bei den Stellmotoren 11 handelt es sich wieder - wie bei den Stellelementen 3 der Figur 1 - um intelligente Steller, die ständig die Konfiguration an die Steuergeräte übermitteln.

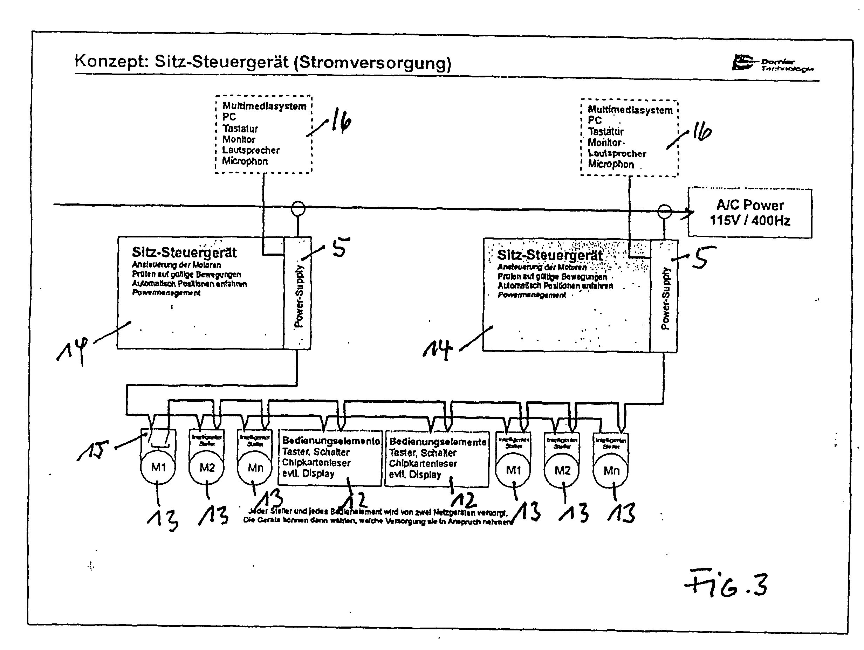

Figur 3 zeigt die Stromversorgung einer Doppelsitzanordnung mit je einem Bedienungselement, drei Stellmotoren 13 und je einem Sitz-Steuergerät 14.

Alle Stellmotoren 13 und die Bedienungselemente 12 sind durch zwei getrennte Netze mit Strom versorgbar, die entweder von dem in der Figur linken oder dem rechten Steuergerät gesteuert werden. Die Stellmotoren 13 können - wie bei dem in der Figur linken Stellmotor 13 angedeutet ist - einen Schalter 15 haben, mit dem sie entweder mit dem einen oder dem anderen Stromkreis verbindbar sind. Zu demselben Zweck können beispielsweise auch Entkopplungsdioden vorgesehen sein. Die Schalter oder dergleichen können auch in den Bedienungselementen angeordnet sein.

Die Stromzufuhr 5 der Steuergeräte 14 kann auch ein Multimediasystem, einen PC, Tastatur, Monitor, Lautsprecher und Mikrophon speisen, die in der Figur insgesamt mit dem Bezugszeichen 16 gekennzeichnet sind.

Mit Hilfe einer der Steuereinheit 14 befindlichen Software oder durch entsprechende Verkabelung sind die Stellmotoren 13 und die Bedienungselemente 12 dem jeweiligen Flugzeugsitzplatz zugeordnet. Dies bedeutet, daß die rechte Einheit die zu ihr gehörenden Systemanteile kennt und damit auch weiß, welche zu dem linken Partner gehören. Da alle Systemteile aber eine gemeinsame Bus-Struktur haben, ist das jeweilige Steuerungssystem auch darüber informiert, was gerade auf der anderen Seite geschieht.

Nach einem weiteren wesentlichen Gesichtspunkt der Erfindung werden sämtliche Unstimmigkeiten und Fehler, deren Art und genauer Ort jeweils festgestellt werden, durch ein durch alle Sitzplätze gehendes Bussystem an ein zentrales Gesamtwartungssystem übermittelt, das in Fig. 1 mit dem Bezugszeichen 17 angedeutet ist. Damit können alle aufgetretenen Fehler an den Sitzplätzen zentral abgefragt werden.

## Patentansprüche

1. Steuerungs- und Energieversorgungssystem für die Antriebseinheiten und Steuereinheiten von wenigstens zwei vorzugsweise benachbarten Flugzeugsitzplätzen,
**dadurch gekennzeichnet,**
**daß** die Steuereinheit (2, 9, 14) und die Antriebseinheiten (3, 11, 13) eines Flugzeugsitzplatzes mit der Steuereinheit und den Antriebseinheiten wenigstens eines weiteren Flugzeugsitzplatzes über eine Datenleitungseinrichtung verbunden sind,
**daß** jede Antriebseinheit von wenigstens zwei Netzgeräten mit Strom versorgbar ist,
und **daß** eine Unterbrechung der normalen Datenleitungsverbindung eines Sitzplatzes erfaßt und über die Datenleitungseinrichtung an die Steuereinheit eines weiteren Flugzeugsitzplatzes gemeldet wird und die Ansteuerung sowie eine Konfigurationsmeldung über das Partnersystem erfolgt.

2. Steuerungs- und Energieversorgungssystem für die Antriebseinheiten und Steuereinheiten von wenigstens zwei vorzugsweise benachbarten Flugzeugsitzplätzen,
**dadurch gekennzeichnet, daß** die Steuereinheit (2, 9, 14) und die Antriebseinheiten (3, 11, 13) eines Flugzeugsitzplatzes mit der Steuereinheit und den Antriebseinheiten wenigstens eines weiteren Flugzeugsitzplatzes über eine Datenleitungseinrichtung verbunden sind,
daß jede Antriebseinheit von wenigstens zwei Netzgeräten mit Strom versorgbar ist,
und daß eine Unterbrechung des normalen Strompfades eines Flugzeugsitzplatzes erfaßt und über die Datenleitungseinrichtung an die Steuereinheiten dieses und eines weiteren Flugzeugsitzplatzes gemeldet wird und die Ansteuerung dann so erfolgt, daß der Strom von dem anderen Netzgerät entnommen wird.

3. Steuerungs- und Energieversorgungssystem für die Antriebseinheiten und Steuereinheiten von wenigstens zwei vorzugsweise benachbarten Flugzeugsitzplätzen,
**dadurch gekennzeichnet, daß** die Steuereinheit (2, 9, 14) und die Antriebseinheiten (9, 11, 13) eines Flugzeugsitzplatzes mit der Steuereinheit und den Antriebseinheiten wenigstens eines weiteren Flugzeugsitzplatzes über eine Datenleitungseinrichtung verbunden sind,
daß jede Antriebseinheit von wenigstens zwei Netzgeräten mit Strom versorgbar ist,
und daß im Falle des Feststellens eines Kurzschlusses oder einer ungewollten Fremdversorgung auf die Stromversorgung des benachbarten Systems umgeschaltet wird.

4. Steuerungs- und Energieversorgungssystem für die Antriebseinheiten und Steuereinheiten von wenigstens zwei vorzugsweise benachbarten Flugzeugsitzplätzen,
**dadurch gekennzeichnet, daß** die Steuereinheit (2, 9, 14) und die Antriebseinheiten (3, 11, 13) eines Flugzeugsitzplatzes mit der Steuereinheit und den Antriebseinheiten wenigstens eines weiteren Flugzeugsitzplatzes über eine Datenleitungseinrichtung verbunden sind,
daß jede Antriebseinheit von wenigstens zwei Netzgeräten mit Strom versorgbar ist,
und daß die Steuereinheiten ihren Status und die Anforderungen an ihre Steueraufgaben zwischen sich austauschen und bei Ausbleiben einer plausiblen Information einer Steuereinheit die andere Steuereinheit deren Aufgaben übernimmt.

5. Steuerungs- und Energieversorgungssystem nach einem der Ansprüche 1 bis 4,
**dadurch gekennzeichnet, daß** die Steuereinheiten (2, 9, 14) und die Antriebseinheiten (3, 11, 13) mit einer lokalen Intelligenz ausgestattet sind, die ständig die Konfiguration an die überwachenden Systemteile übermittelt.

6. Steuerungs- und Energieversorgungssystem nach einem der Ansprüche 1 bis 5,
**dadurch gekennzeichnet, daß** die Datenleitungseinrichtung eine BUS- oder Ring-Architektur hat.

7. Steuerungs- und Energieversorgungssystem nach einem Ansprüche 1 bis 6,
**dadurch gekennzeichnet, daß** auch jedes Bedienelement (1, 10, 12) der Flugzeugsitzplätze von wenigstens zwei Netzgeräten versorgbar ist.

8. Steuerungs- und Energieversorgungssystem nach Anspruch 7,
**dadurch gekennzeichnet, daß** bei Ausfall eines Bedienelementes (1, 10, 12) dasjenige des anderen Flugzeugsitzplatzes benutzbar ist.

9. Steuerungs- und Energieversorgungssystem nach einem der Ansprüche 1 bis 8,
**dadurch gekennzeichnet, daß** eine gemeinsame maximale Stromstärke für die wenigstens zwei Flugzeugsitzplätze bereitgestellt wird.

10. Steuerungs- und Energieversorgungssystem nach Anspruch 9,
**dadurch gekennzeichnet, daß** bei Überschreiten der maximalen Stromstärke vorbestimmte elektrische Geräte automatisch abgeschaltet werden.

## Claims

1. Control and power supply system for the drive units and control units of at least two, preferably adjacent aeroplane seats, **characterised in that** the control unit (2, 9, 14) and the drive units (3, 11, 13) of an aeroplane seat are connected with the control unit and the drive units of at least one further aeroplane seat via a data cable means, **in that** each drive unit can be supplied with power by at least two mains units, and **in that** a disruption of the normal data cable connection of a seat will be detected and transmitted via the data cable means to the control unit of a further aeroplane seat, and control as well as the configuration information issued via the partner system.

2. Control and power supply system for the drive units and control units of at least two, preferably adjacent aeroplane seats, **characterised in that** the control unit (2, 9, 14) and the drive units (3, 11, 13) of an aeroplane seat are connected with at least one further aeroplane seat via a data cable means, **in that** each drive unit can be supplied with power by at least two mains units, and **in that** a disruption of the normal power path of an aeroplane seat is detected and transmitted via the data cable means to the control units of the same and a further aeroplane seat and the control is then realised in such a way that power is taken from the other mains unit.

3. Control and power supply system for the drive units and control units of at least two, preferably adjacent aeroplane seats, **characterised in that** the control unit (2, 9, 14) and the drive units (9, 11, 13) of an aeroplane seat are connected with the control unit and the drive units of at least one further aeroplane seat via a data cable means, **in that** each drive unit can be supplied with power by at least two mains units, and **in that** the power supply can be switched to the neighbouring system in a case where a short circuit or an unintended outside supply is detected.

4. Control and power supply system for the drive units and control units of at least two, preferably adjacent aeroplane seats, **characterised in that** the control unit (2, 9, 14) and the drive units (3, 11, 13) of an aeroplane seat are connected with the control unit and the drive units of at least one further aeroplane seat via a data cable means, **in that** each drive unit can be supplied with power by at least two mains units, and **in that** the control units exchange status and requirements relating to their control tasks between themselves, and where one control unit takes over the tasks of the other control unit when plausible information is not received.

5. Control and power supply system according to one of the Claims 1 to 4, **characterised in that** the control units (2, 9, 14) and the drive units (3, 11, 13) are equipped with local intelligence which continuously transmits the configuration to the monitoring system components.

6. Control and power supply system according to one of the Claims 1 to 5, **characterised in that** the data cable means incorporates a BUS or ring architecture.

7. Control and power supply system according to one of the Claims 1 to 6, **characterised in that** each operating element (1, 10, 12) of the aeroplane seats can also be supplied by at least two mains units.

8. Control and power supply system according to Claim 7, **characterised in that** the relevant element of the other aeroplane seat can be used when an operating element (1, 10, 12) fails.

9. Control and power supply system according to one of the Claims 1 to 8, **characterised in that** a common maximum current strength is supplied for the at least two aeroplane seats.

10. Control and power supply system according to Claim 9, **characterised in that** pre-determined electrical equipment is automatically switched off when the maximum current strength is exceeded.

## Revendications

1. Système de commande et d'alimentation en énergie pour les unités d'entraînement et les unités de commande d'au moins deux sièges d'avion, de préférence voisins,
**caractérisé en ce que**
l'unité de commande (2, 9, 14) et les unités d'entraînement (3, 11, 13) d'un siège d'avion sont reliées à l'unité de commande et aux unités d'entraînement d'au moins un autre siège d'avion par l'intermédiaire d'un système de lignes de transmission de données,
chaque unité d'entraînement peut être alimentée en courant par au moins deux blocs d'alimentation, et
une interruption de la liaison normale par lignes de transmission de données d'un siège est détectée, et signalée à l'unité de commande d'un autre siège d'avion par l'intermédiaire du système de lignes de transmission de données, et la commande, ainsi qu'une signalisation de configuration, étant effectuées par l'intermédiaire du système partenaire.

2. Système de commande et d'alimentation en énergie pour les unités d'entraînement et les unités de commande d'au moins deux sièges d'avion, de préférence voisins,
**caractérisé en ce que** l'unité de commande (2, 9, 14) et les unités d'entraînement (3, 11, 13) d'un siège d'avion sont reliées à l'unité de commande et aux unités d'entraînement d'au moins un autre siège d'avion par l'intermédiaire d'un système de lignes de transmission de données,
chaque unité d'entraînement peut être alimentée en courant par au moins deux blocs d'alimentation, et
une interruption de la voie de courant normale d'un siège d'avion est détectée, et signalée aux unités de commande de ce siège d'avion et d'un autre siège d'avion par l'intermédiaire du système de lignes de transmission de données, et la commande étant alors effectuée de telle sorte que le courant soit prélevé de l'autre bloc d'alimentation.

3. Système de commande et d'alimentation en énergie pour les unités d'entraînement et les unités de commande d'au moins deux sièges d'avion, de préférence voisins,
**caractérisé en ce que** l'unité de commande (2, 9, 14) et les unités d'entraînement (9, 11, 13) d'un siège d'avion sont reliées à l'unité de commande et aux unités d'entraînement d'au moins un autre siège d'avion par l'intermédiaire d'un système de lignes de transmission de données,
chaque unité d'entraînement peut être alimentée en courant par au moins deux blocs d'alimentation, et
dans le cas de la constatation d'un court-circuit ou d'une alimentation extérieure involontaire, il est commuté sur l'alimentation en courant du système voisin.

4. Système de commande et d'alimentation en énergie pour les unités d'entraînement et les unités de commande d'au moins deux sièges d'avion, de préférence voisins,
**caractérisé en ce que** l'unité de commande (2, 9, 14) et les unités d'entraînement (3, 11, 13) d'un siège d'avion sont reliées à l'unité de commande et aux unités d'entraînement d'au moins un autre siège d'avion par l'intermédiaire d'un système de lignes de transmission de données,
chaque unité d'entraînement peut être alimentée en courant par au moins deux blocs d'alimentation, et
les unités de commande échangent entre elles leur état et les demandes faites à leurs fonctions de commande et, en l'absence d'une information plausible d'une unité de commande, l'autre unité de commande reprend ses fonctions.

5. Système de commande et d'alimentation en énergie selon l'une quelconque des revendications 1 à 4,
**caractérisé en ce que** les unités de commande (2, 9, 14) et les unités d'entraînement (3, 11, 13) sont équipées d'une intelligence locale, qui transmet en permanence la configuration aux éléments de surveillance du système.

6. Système de commande et d'alimentation en énergie selon l'une quelconque des revendications 1 à 5,
**caractérisé en ce que** le système de lignes de transmission de données possède une architecture de BUS ou en boucle.

7. Système de commande et d'alimentation en énergie selon l'une quelconque des revendications 1 à 6,
**caractérisé en ce que** chaque élément de commande (1, 10, 12) des sièges d'avion peut également être alimenté par au moins deux blocs d'alimentation.

8. Système de commande et d'alimentation en énergie selon la revendication 7,
**caractérisé en ce que**, en cas de défaillance d'un élément de commande (1, 10, 12), celui de l'autre siège d'avion peut être utilisé.

9. Système de commande et d'alimentation en énergie selon l'une quelconque des revendications 1 à 8,
**caractérisé en ce qu'**une intensité de courant maximale commune est mise à disposition au moins pour les deux sièges d'avion.

10. Système de commande et d'alimentation en énergie selon la revendication 9,
**caractérisé en ce que**, lors d'un dépassement de l'intensité de courant maximale des appareils électriques prédéterminés sont automatiquement déconnectés.
